(19) Europäisches Patentamt / European Patent Office / Office européen des brevets

(11) **EP 2 643 611 B1**

(12) **EUROPEAN PATENT SPECIFICATION**

(45) Date of publication and mention
of the grant of the patent:
**27.09.2017 Bulletin 2017/39**

(51) Int Cl.:
**F16F 9/19** (2006.01)

(21) Application number: **11708846.8**

(22) Date of filing: **15.03.2011**

(86) International application number:
**PCT/EP2011/053913**

(87) International publication number:
**WO 2011/113844 (22.09.2011 Gazette 2011/38)**

(54) **FREQUENCY DEPENDENT DAMPING**

FREQUENZABHÄNGIGE DÄMPFUNG

AMORTISSEMENT DÉPENDANT DE LA FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2010 GB 201004250**

(43) Date of publication of application:
**02.10.2013 Bulletin 2013/40**

(73) Proprietor: **Trysome Limited
Woking, Surrey GU21 4YH (GB)**

(72) Inventor: **WATKINS, Oliver
Woking Surrey GU21 4YH (GB)**

(74) Representative: **Slingsby Partners LLP
1 Kingsway
London WC2B 6AN (GB)**

(56) References cited:
**EP-A1- 0 601 982        EP-A1- 1 089 009
WO-A1-03/095248        FR-A- 1 073 386
JP-A- H03 186 602        JP-A- H10 121 775
SU-A1- 1 114 828        US-A- 5 682 968**

**Description**

This invention relates to mechanical linkages.

Physical components are often interconnected by a mechanical linkage that is intended to have certain properties to resist or permit relative motion of the components. One example of such an arrangement is in vehicle suspension systems. In a typical vehicle suspension system the wheels are mounted on bearings and the bearings are attached to the body of the vehicle via a suspension linkage which supports the body of the vehicle on the bearings. The suspension linkage includes components such as springs and dampers that are intended to control the motion of the vehicle's body relative to the wheels. The behaviour of a suspension linkage is normally chosen with care so as to impart certain dynamic qualities to the ride of the vehicle. For example, it may be desired that the suspension linkage permits relative motion of the wheels and the body when the vehicle drives over a bump, but resists roll when the vehicle corners and resists heave when the vehicle accelerates.

It is known that any passive linear system may be realised by a finite interconnection of springs, dampers and inerters. (See, for example US 7,316,303). In theory this principle allows a designer to achieve any desired linear response. However, in practice it is necessary for the components needed to provide that response to be sufficiently light, compact, reliable and inexpensive to be useful in a real-world application.

Conventional dampers have two mounting points and provide resistance to relative motion of the mounting points, the resistance increasing with increasing velocity of the motion. It is known that in some applications it would be desirable for the degree of damping to be dependent on the frequency of the motion. WO 03/040586 describes a frequency-specific damper ("FSD"). In the damper of WO 03/040586 the piston includes an auxiliary chamber which fills with and empties of fluid as the mounting points of the damper move relative to each other. Because filing the auxiliary chamber takes some time, the damper has a frequency-dependent characteristic. In practice, the behaviour of dampers of this type can be complex. For example, if the motion of the mounting points reverses when the auxiliary chamber is part full then the time-base of the frequency-dependent behaviour can be upset. Also, the time taken to fill or empty the auxiliary chamber is not constant, but depends on the force with which fluid is driven into or out of the chamber; as a result of which the frequency-dependent behaviour of the damper is different depending on the applied force. For these reasons, it can be difficult to achieve consistent frequency-dependent behaviour from dampers of this type without using other components to counteract the effects described above.

WO03/095248 discloses a damper that has a tubular member which accommodates a piston. It has a first valve which sits on one end of the tubular member when the valve is in the rest position. The other end of the tubular member has ports to allow fluid inside the tubular member to allow communication with the end of the damper near the first valve. The first valve has a number of flow paths that are connected together by a slide valve in dependence on the direction of movement of the piston.

FR1073386 discloses a shock absorber that has a hole through the piston to allow fluid to flow from one side of the piston to the other.. Fluid flows though the piston when the piston moves. There is a difference in volumes on either side of the piston which is caused by the presence of the piston rod in chamber. To compensate for this difference in volumes a compensation chamber is provided which is connected to the chamber that does not have the piston rod running through it. Flow to/from chamber that chamber to the compensation chamber is controlled by elastic valve and sprung valve.

EP1089009 describes a hydraulic shock absorber having a piston movable within a chamber. Each side of the chamber is connected to a compression valve. The other side of the compression valve is connected to the other side of the chamber.

US5682968 described a semi-active damper controlled by a control circuit. The damper has a line connected to each side of a piston. The lines each have a variable restriction and a non-return valve. The lines connect together at a junction with an accumulator. The non-return valves operate to permit fluid flow through one of the restrictions during each of compression and rebound.

EP0601982 describes a shock absorber with an accumulator that is connected to either side of a piston in a cylinder. The accumulator is connected to the cylinder by circuits which have restrictions and one-way valves. The one-way valves act to permit fluid flow through one of the sets of restrictions.

SU1114828 a hydraulic damper which has lines that connect to either side of the piston in the chamber. The lines each connect to a compensation chamber via one-way valves. The compensation chamber also has a hole that connects to chamber when the piston has moved from a mid-position to permit accelerated return to the mid-position.

JP410121775 oil damper for vibration control. The damper has a line connected to each side of the piston. Each line has an orifice and a non-return valve. The non-return valve means that only one of the orifices is present in the flow for compression and rebound.

JP403186602 a cylinder lock device for a hydraulic device that can select whether to pass a large volume of hydraulic oil at a high rate.

It would be desirable to have a damper that provides stricter frequency-dependent characteristics. Such a damper should preferably be readily implementable.

According to one aspect of the present invention there is provided a frequency-specific damper linkage comprising: two mounting points, the mounting points being interconnected by two links, the first link comprising a damper and the second link comprising a damper in series with a spring; a cylinder; a piston moveable in the cylinder, one of the mounting points being fast with the cylinder and the other mounting point being fast with the piston; a passage extending between points in the cylinder on either side of the piston; two restrictions in the passage to restrict the flow of fluid through the passage; and a fluid spring communicating with a point in the passage between the restrictions, wherein the fluid spring is connected to an opening (25) in the passage which is located between the restrictions wherein the restrictions respectively provide the dampers and the fluid spring provides the spring in each case by virtue of their action on the piston and cylinder. The fluid spring comprises a chamber having a wall part that is acted upon by a resilient biasing means. One of the mounting points may be fast with the cylinder. The other mounting point may be fast with the piston.

The frequency-specific damper linkage as may comprise: a second passage extending between points in the cylinder on either side of the piston; two second restrictions in the second passage; a second fluid spring communicating with a point in the second passage between the second restrictions. The first passage may comprise a one-way valve that permits fluid flow in one direction and resists fluid flow in the other direction; and the second passage may comprise a one-way valve that permits fluid flow in on direction and resists fluid flow in the other direction. The one-way valves of the two passages may operate in opposite directions. One or more of the restrictions and characteristics of the fluid spring may be different in the two passages.

The second fluid spring may be connected to an opening in the passage which is located between the restrictions. The fluid restrictions may be constituted by constrictions in the passageway. The restrictions may be adjustable by means of threaded projections extending into the passage which can be turned to adjust the obstruction to flow.

The chamber, the passage and the cylinder may contain or be filled with a fluid.

The linkage may be implemented in a shock absorber. The shock absorber may comprise two mounting points and a frequency specific damper linkage as set out above connected between the mounting points.

A vehicle may comprise a frequency-specific damper linkage or a shock absorber as set out above. The vehicle may be supported on running gear. The running gear may comprise engaging means suitable for engaging the ground or another supporting medium and mounting means vertically fast with the engaging means when the vehicle is in its running orientation but vertically movable with respect to the body of the vehicle and suitable for mounting the engaging means to the body of the vehicle. The frequency-specific damper linkage is conveniently connected between the body of the vehicle and a part of the running gear such as the mounting means. The mounting means could be or be at the distal end of a swing-arm. Thus the running gear could be a mounting structure to which is mounted a wheel.

The present invention will now be described by way of example with reference to the accompanying drawings.

In the drawings:

Figure 1    shows a mechanical linkage.

Figure 2    is a schematic diagram of a damper.

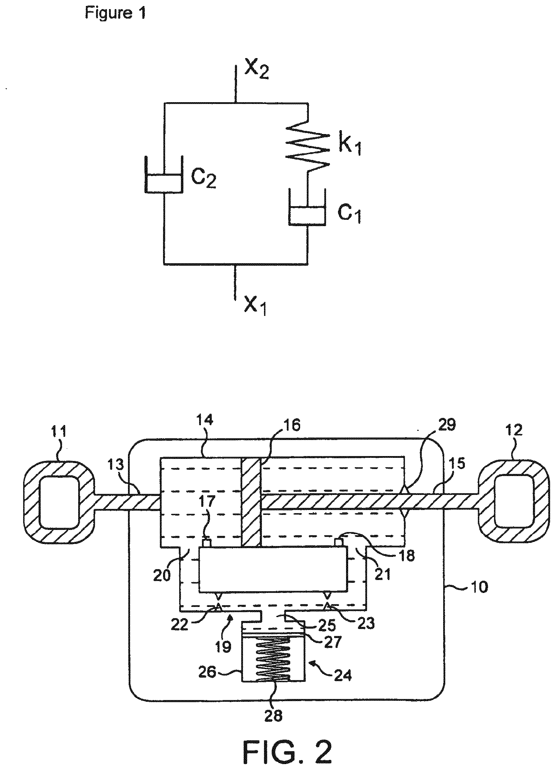

Figure 1 shows a mechanical linkage connecting two points $x_1$ and $x_2$. The linkage contains two parallel branches, each of which extends independently of the other between $x_1$ and $x_2$. The first branch has a spring $k_1$ in series with a first damper $c_1$. The second branch has a second damper $c_2$. In this example each branch consists of the components listed above, together with inert linkages between them. However, other components could be included.

The transfer function of this system is given by:

$$G(s) = \frac{c_1 s + k_1}{s^2 c_1 c_2 + k_1(c_1 + c_2)s}$$

The non-trivial pole and zero of this system ($\omega_1$ and ($\omega_2$) occur at frequencies given by:

$$\omega_1 = \frac{k_1}{c_1}$$

$$\omega_2 = \frac{k_1(c_1 + c_2)}{c_1 c_2}$$

The low frequency admittance Y(0) is given by:

$$Y(0) = \frac{1}{(c_1 + c_2)}$$

The low frequency admittance corresponds to low frequency damping by $c_1$ and $c_2$.

It follows that:

$$c_1 = \frac{\omega_2 - \omega_1}{Y(0)\omega_2}$$

$$c_2 = \frac{\omega_1}{Y(0)\omega_2}$$

$$k_1 = \frac{\omega_1(\omega_2 - \omega_1)}{Y(0)\omega_2}$$

In this way, values of $c_1$, $c_2$ and $k_1$ can be selected so as to achieve a desired frequency-specific performance and low frequency admittance.

A frequency-specific damping linkage of this type is especially suitable for use in a vehicle for controlling relative motion of the running gear (e.g. the wheels) and the body of the vehicle. Typically, the wheels are mounted to the body at the distal ends of swing arms. In one application the linkage could be mounted between the body and a swing arm or between a wheel and its swing arm. In another application the linkage could be mounted between the swing arms of a pair of wheels, as a tri-damper for resisting roll.

Dampers of the type described herein could be used at any of the wheels of a vehicle. However, in one specific example they could be used at only the rear wheels of a vehicle, with non-frequency specific dampers being used at the front wheels. Dampers of the type described herein are particularly advantageous at the rear wheels for resisting rise and squat during braking and acceleration.

Each damper may be implemented by means of any device that provides a damping effect. If a damper is implemented by means of a piston and cylinder arrangement then it may have a dedicated piston and cylinder or may share them with the other damper. The spring may be implemented by means of any device that provides a springing effect.

There could be other links between the mounting points, for example links that act as bump or rebound stops to limit the maximum extent of relative motion of the mounting points. However, those links preferably do not influence the damping behaviour of the relative motion of the mounting points, at least in the mid-part of their relative motion.

In some applications, for example high-performance vehicles, it may be advantageous for the frequency-specific damping linkage to be configured to admit relatively high frequency inputs and resist relatively low frequency inputs. In other applications, for example off-road vehicles, it may be advantageous for the frequency-specific damping linkage to be configured to admit relatively low frequency inputs and resist relatively high frequency inputs

It is conventional for a damper to comprise a piston moveable in a cylinder with a passageway extending between the extreme ends of the cylinder. A fluid occupies the cylinder on either side of the piston and also the passageway. As the piston moves in the cylinder fluid is forced through the passageway. Mounting points are provided on a rod connected to the piston and on the cylinder. As the mounting points move relative to each other, fluid is forced through the passageway.

Commonly two passageways are provided, each extending between the extreme ends of the cylinder. The passageways each have one-way valves in them, which are arranged oppositely so that so that in bump (i.e. movement of the piston deeper into the cylinder) the fluid passes through one passageway and during rebound (i.e. movement of the piston in the opposite direction relative to the cylinder) the fluid passes through the other passageway. Damping is achieved by means of orifices disposed in each passageway to restrict the flow of fluid through them.

In a passage of the type described above extending between points in the cylinder on either side of the piston, two orifices or other restrictions are disposed to restrict the flow of fluid through the passageway. Between those orifices a fluid spring lets on to the passageway. The fluid spring comprises a chamber pressurised by a springloaded piston or other biasing means such as a diaphragm acted on by compressed gas, the chamber being filled with the fluid of the damper and communicating freely with a location in the passageway between the orifices. This arrangement is equivalent to the arrangement shown in figure 1, with the orifices respectively providing the dampers $c_1$ and $c_2$ and the fluid spring providing the spring $k_1$, in each case by virtue of their action on the piston and cylinder. The sizes of the orifices and the force/displacement characteristic of the spring can be chosen to implement suitable values of $c_1$, $c_2$ and $k_1$. This configuration has the great advantage that it can be packaged especially efficiently since it only requires one main damper cylinder and piston. The same passageway can be used for damping of bump and rebound motion, or the arrangement described above, comprising two orifices and a fluid spring, can be implemented in dedicated bump and rebound passageways, each of which is provided with a one-way valve. The orifices are preferably readily adjustable, for example by means of threaded projections extending into the passageway, which can be turned to adjust the obstruction to flow. The characteristics of the spring are preferably readily adjustable, for example by means of a threaded rod which acts on a flexible spring which in turn acts on the wall of the chamber of the fluid spring, the pre-bias of the flexible spring being adjustable by means of the threaded rod.

A damper of this type is illustrated in figure 2, in the form of a shock absorber for a vehicle. Figure 2 shows a shock absorber having a casing 10. The shock absorber has attachment points 11 and 12 by which it may be attached to parts of a structure that can move relative to each other. Inside the casing, attachment point 11 is rigidly connected via a connecting rod 13 to a cylinder 14. The axis of the cylinder is generally parallel with a line between the two attachment points. Attachment point 12 is rigidly connected via a connecting rod 15 to a piston 16 which fits snugly in cylinder 14. The piston is constrained to slide in the cylinder between a stop 17 near the head of the piston and a stop 18 which prevents the piston from being withdrawn from the cylinder. A fluid passageway 19 is connected between two openings 20, 21 in the side-wall of the cylinder. The openings are located such that at any possible location of the piston one opening is on one side of the piston and one opening is on the other. The passageway 19 has two fluid restrictions 22, 23 in it. These may be constituted by constrictions in the passageway. A fluid spring 24 is connected to an opening 25 in the passageway, which is located between the fluid restrictions 22, 23. The fluid spring comprises a cylinder 26 which communicates with the passageway 19 via opening 25, a piston 27 which fits snugly in the cylinder 26 and a flexible spring 28 (in this example a coil spring) which biases the piston into the cylinder. The passageway 19 and the fluid spring are packaged together with the cylinder 14 and piston 16 in casing 10. The cylinder 14, passageway 19 and the part of the cylinder 26 that communicates with the passageway 19 are filled with fluid, preferably a liquid, and most preferably a substantially incompressible liquid such as a hydraulic oil.

In the example of figure 2, the cylinder 14 is sealed about the connecting rod 15 by seal 29. Thus in this example the cylinder 14, passageway 19 and fluid spring 24 constitute a closed system and the damping characteristics of the restrictions 22, 23 and the fluid spring 24 will obtain in extension and contraction of the damper (e.g. shock and rebound in a vehicular suspension application). In other implementations there could be two passages in parallel with and opening on to the main cylinder 14 as does passageway 19 in figure 2, each with its own restrictions and fluid spring. Each such passageway could be fitted with a one-way valve that permits fluid flow in one direction and resists fluid flow in the other direction. The one-way valves of the two passageways could operate in opposite directions. In this way, different damping characteristics can be provided in extension (the fluid flowing through one of the passageways) from in contraction (the fluid flowing through the other of the passageways) by virtue of one or more of the restrictions and the characteristics of the fluid spring being different in the two passageways.

The values of the components of the damper may be chosen for any specific application, depending on the ride or other performance characteristics required. For example, the values that are best for use in a race car application may differ from those that are best for use in an off-road vehicle. Nevertheless, it has been found that it is advantageous in some applications for the damper to exhibit a substantial difference in admittance between its behaviours at 1 Hz and 3Hz. In a vehicle suspension system, forces at frequencies below 1 Hz are typically due to factors such as squat, rise and roll, which the performance of a road-going or racing vehicle benefits from resisting. In contrast, forces at frequencies above 3Hz are typically due to variations in the road surface, to which it is beneficial for the suspension of the vehicle to be compliant. It can therefore be advantageous for the damper to be substantially more compliant to any forces at over 3Hz than to any forces at below 1Hz.

As indicated above, the frequency-specific damper described herein may advantageously be used in wheeled vehicles, with the damper mounted between the running gear of the vehicle (for example a swing arm or other wheel mounting) and the body of the vehicle. The frequency-specific damper described herein may be used in other applications, for example in non-wheeled vehicles such as snowmobiles (whose running gear takes the form of skids); aircraft; vibration control for static industrial machinery or domestic appliances such as the spinning drums of washing machines.

In view of the foregoing description it will be evident to a person skilled in the art that various modifications may be made within the scope of the invention.

**Claims**

1. A frequency-specific damper linkage comprising:

   two mounting points (11, 12), the mounting points being interconnected by two links, the first link comprising a damper and the second link comprising a damper in series with a spring; a cylinder (14); a piston (16) moveable in the cylinder, one of the mounting points being fast with the cylinder and the other mounting point being fast with the piston; a passage (19) extending between points (20, 21) in the cylinder on either side of the piston; two restrictions (22, 23) in the passage to restrict the flow of fluid through the passage; and a fluid spring (24) communicating with a point (25) in the passage between the restrictions, wherein the fluid spring is connected to an opening (25) in the passage which is located between the restrictions; wherein the restrictions respectively provide the dampers and the fluid spring provides the spring in each case by virtue of their action on the piston and cylinder.

2. A frequency-specific damper linkage as claimed in claim 1, wherein the fluid spring comprises a chamber (26) having a wall part (27) that is acted upon by a resilient biasing means (28).

3. A frequency-specific damper linkage as claimed in claim 1 or 2, wherein one of the mounting points (11) is fast with the cylinder and the other mounting point (12) is fast with the piston.

4. A frequency-specific damper linkage as claimed in any of claims 1 to 3, comprising:

   a second passage extending between points in the cylinder on either side of the piston; two second restrictions in the second passage; a second fluid spring communicating with a point in the second passage between the second restrictions.

**5.** A frequency-specific damper linkage as claimed in claim 4, wherein the first passage comprises a one-way valve that permits fluid flow in one direction and resists fluid flow in the other direction; and the second passage comprises a one-way valve that permits fluid flow in on direction and resists fluid flow in the other direction.

**6.** A frequency-specific damper linkage as claimed in claim 5, wherein the one-way valves of the two passages operate in opposite directions.

**7.** A frequency-specific damper linkage as claimed in claim 6, wherein one or more of the restrictions and characteristics of the fluid spring are different in the two passages.

**8.** A frequency-specific damper linkage as claimed in any of claims 4 to 7, wherein the second fluid spring is connected to an opening in the passage which is located between the restrictions.

**9.** A frequency-specific damper linkage as claimed in any preceding claim, wherein the fluid restrictions are constituted by constrictions in the passage.

**10.** A frequency-specific damper linkage as claimed in any preceding claim, wherein the restrictions are adjustable by means of threaded projections extending into the passage which can be turned to adjust the obstruction to flow.

**11.** A frequency-specific damper linkage as claimed in any of claims 1 to 10, wherein a chamber, the passage and the cylinder are filled with a fluid.

**12.** A shock absorber comprising two mounting points (11, 12) and a frequency specific damper linkage as claimed in any preceding claim connected between the mounting points.

**13.** A vehicle comprising a frequency-specific damper linkage as claimed in any of claims 1 to 11.

**14.** A vehicle as claimed in claim 13, wherein the vehicle is supported on running gear and the frequency-specific damper linkage is connected between the body of the vehicle and a part of the running gear.

**15.** A vehicle as claimed in claim 14, wherein the said part of the running gear is a mounting structure to which is mounted a wheel.


**Patentansprüche**

**1.** Frequenzspezifisches Dämpfergestänge, umfassend:

zwei Montagepunkte (11, 12), wobei die Montagepunkte durch zwei Gestänge miteinander verbunden sind, wobei das erste Gestänge einen Dämpfer umfasst, und das zweite Gestänge einen Dämpfer in Reihe mit einer Feder umfasst; einen Zylinder (14); einen in dem Zylinder beweglichen Kolben (16), wobei einer der Montagepunkte fest mit dem Zylinder, und der andere Montagepunkt fest mit dem Kolben angeordnet ist; einen Durchgang (19), der sich zwischen den Punkten (20, 21) in dem Zylinder auf beiden Seiten des Kolbens erstreckt; zwei Einschränkungen (22, 23) in dem Durchgang zum Einschränken des Fluidstroms durch den Durchgang; und eine Fluidfeder (24) in Verbindung mit einem Punkt (25) in dem Durchgang zwischen den Einschränkungen, wobei die Fluidfeder mit einer Öffnung (25) in dem Durchgang verbunden ist, die zwischen den Einschränkungen positioniert ist; wobei die Einschränkungen jeweils die Dämpfer bereitstellen und die Fluidfeder die Feder in jedem Fall kraft ihrer Wirkung auf den Kolben und den Zylinder bereitstellt.

**2.** Frequenzspezifisches Dämpfergestänge nach Anspruch 1, wobei die Fluidfeder eine Kammer (26) mit einem Wandteil (27) umfasst, worauf mittels einer elastischen Vorspanneinrichtung (28) eingewirkt wird.

**3.** Frequenzspezifisches Dämpfergestänge nach Anspruch 1 oder 2, wobei einer der Montagepunkte (11) fest mit dem Zylinder und der andere Montagepunkt (12) fest mit dem Kolben angeordnet ist.

**4.** Frequenzspezifisches Dämpfergestänge nach einem der Ansprüche 1 bis 3, umfassend:

einen zweiten Durchgang, der sich zwischen den Punkten in dem Zylinder auf beiden Seiten des Kolbens erstreckt; zwei zweite Einschränkungen in dem zweiten Durchgang; eine zweite Fluidfeder in Verbindung mit einem Punkt in dem zweiten Durchgang zwischen den zweiten Einschränkungen.

**5.** Frequenzspezifisches Dämpfergestänge nach Anspruch 4, wobei der erste Durchgang ein Rückschlagventil umfasst, das den Fluidstrom in eine Richtung zulässt und dem Fluidstrom in der anderen Richtung widersteht; und wobei der zweite Durchgang ein Rückschlagventil umfasst, das den Fluidstrom in eine Richtung zulässt und dem Fluidstrom in der anderen Richtung widersteht.

**6.** Frequenzspezifisches Dämpfergestänge nach Anspruch 5, wobei die Rückschlagventile der zwei Durchgänge in entgegengesetzten Richtungen arbeiten.

**7.** Frequenzspezifisches Dämpfergestänge nach Anspruch 6, wobei sich die eine oder mehreren der Einschränkungen und Merkmale der Fluidfeder in den zwei Durchgängen unterscheiden.

**8.** Frequenzspezifisches Dämpfergestänge nach einem der Ansprüche 4 bis 7, wobei die zweite Fluidfeder mit einer Öffnung in dem Durchgang verbunden ist, die zwischen den Einschränkungen positioniert ist.

**9.** Frequenzspezifisches Dämpfergestänge nach einem der vorangegangenen Ansprüche, wobei die Fluideinschränkungen aus Einengungen in dem Durchgang bestehen.

**10.** Frequenzspezifisches Dämpfergestänge nach einem der vorangegangenen Ansprüche, wobei die Einschränkungen durch Mittel von mit Gewinde versehenen Vorsprüngen einstellbar sind, die sich in den Durchgang erstrecken, die drehbar sind, um das Hindernis für den Strom einzustellen.

**11.** Frequenzspezifisches Dämpfergestänge nach einem der Ansprüche 1 bis 10, wobei eine Kammer, der Durchgang und der Zylinder mit einem Fluid gefüllt sind.

**12.** Stoßdämpfer, umfassend zwei Montagepunkte (11, 12) und ein frequenzspezifisches Dämpfergestänge, wie in einem der vorangegangenen Ansprüche beansprucht, das zwischen den Montagepunkten verbunden ist.

**13.** Fahrzeug, umfassend ein frequenzspezifisches Dämpfergestänge nach einem der Ansprüche 1 bis 11.

**14.** Fahrzeug nach Anspruch 13, wobei das Fahrzeug auf einem Fahrwerk getragen wird und das frequenzspezifische Dämpfergestänge zwischen der Karosserie des Fahrzeugs und einem Teil des Fahrwerks verbunden ist.

**15.** Fahrzeug nach Anspruch 14, wobei der Teil des Fahrwerks eine Montagestruktur ist, woran ein Rad montiert ist.

**Revendications**

**1.** Liaison à amortissement spécifique à la fréquence comprenant :

deux points de montage (11, 12), les points de montage étant interconnectés par deux liaisons, la première liaison comprenant un amortisseur et la deuxième liaison comprenant un amortisseur en série avec un ressort;
un cylindre (14) ;
un piston (16) mobile dans le cylindre, un des points de montage étant solidaire du cylindre et l'autre point de montage étant solidaire du piston ;
un passage (19) s'étendant entre des points (20, 21) dans le cylindre de chaque côté du piston ;
deux restrictions (22, 23) dans le passage pour restreindre le flux de fluide dans le passage ; et
un ressort à fluide (24) communicant avec un point (25) dans le passage entre les restrictions, où le ressort à fluide est connecté à une ouverture (25) dans le passage qui est située entre les restrictions ;
où les restrictions fournissent respectivement les amortisseurs et le ressort à fluide fournit le ressort dans chaque cas en vertu de leur action sur le piston et le cylindre.

**2.** Liaison à amortissement spécifique à la fréquence selon la revendication 1, dans laquelle le ressort à fluide comprend une chambre (26) ayant une partie de cloison (27) sur laquelle agit un moyen de sollicitation élastique (28).

**3.** Liaison à amortissement spécifique à la fréquence selon la revendication 1 ou 2, dans laquelle un des points de montage (11) est solidaire au cylindre et l'autre point de montage (12) est solidaire au piston.

**4.** Liaison à amortissement spécifique à la fréquence selon l'une quelconque des revendications 1 à 3 comprenant :

un deuxième passage s'étendant entre des points dans le cylindre de chaque côté du piston ;
deux deuxièmes restrictions dans le deuxième passage; un deuxième ressort à fluide communicant avec un point dans le deuxième passage entre les deuxièmes restrictions.

**5.** Liaison à amortissement spécifique à la fréquence selon la revendication 4, dans laquelle le premier passage comprend une valve unidirectionnelle qui permet un flux de fluide dans une direction et résiste au flux de fluide dans l'autre direction ; et le deuxième passage comprend une valve unidirectionnelle qui permet un flux de fluide dans une direction et résiste au flux de fluide dans l'autre direction.

**6.** Liaison à amortissement spécifique à la fréquence selon la revendication 5, dans laquelle les valves des deux passages opèrent dans des directions opposées.

7. Liaison à amortissement spécifique à la fréquence selon la revendication 6, dans laquelle une ou plusieurs des restrictions et des caractéristiques du ressort à fluide sont différentes dans les deux passages.

8. Liaison à amortissement spécifique à la fréquence selon l'une quelconque des revendications 4 à 7, dans laquelle le deuxième ressort à fluide est connecté à une ouverture dans le passage qui est située entre les restrictions.

9. Liaison à amortissement spécifique à la fréquence selon l'une quelconque des revendications précédentes, dans laquelle les restrictions de fluide sont constituées par des rétrécissements dans le passage.

10. Liaison à amortissement spécifique à la fréquence selon l'une quelconque des revendications précédentes, dans laquelle les restrictions sont réglables au moyen de projections filetées s'étendant dans le passage qui peuvent être tournées pour régler l'obstruction de flux.

11. Liaison à amortissement spécifique à la fréquence selon l'une quelconque des revendications 1 à 10, dans laquelle une chambre, le passage et le cylindre sont remplis d'un fluide.

12. Amortisseur de choc comprenant deux points de montage (11, 12) et une liaison à amortissement spécifique à la fréquence selon l'une quelconque des revendications précédentes connectée entre les points de montage.

13. Véhicule comprenant une liaison à amortissement spécifique à la fréquence selon l'une quelconque des revendications 1 à 11.

14. Véhicule selon la revendication 13, dans lequel le véhicule est supporté sur un train de roulement et la liaison à amortissement spécifique à la fréquence est connectée entre le corps du véhicule et une partie du train de roulement.

15. Véhicule selon la revendication 14, dans lequel ladite partie du train de roulement est une structure de montage à laquelle est montée une roue.

Figure 1

FIG. 2

**EP 2 643 611 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7316303 B
- WO 03040586 A
- WO 03095248 A
- FR 1073386
- EP 1089009 A
- US 5682968 A
- EP 0601982 A
- SU 1114828
- JP 410121775 B
- JP 403186602 A